# EUROPEAN PATENT APPLICATION

(11) **EP 4 819 595 A1**
(43) Date of publication of application: **07.10.2026**
(21) Application number: 26167837.9
(22) Date of filing: 25.03.2026
(51) Int. Cl.: H04N 1/00

(54) **DOCUMENT FEEDER, IMAGE READER, AND IMAGE FORMING APPARATUS**

(30) Priority: 01.04.2025 JP 2025060807
(71) Applicant: Canon Kabushiki Kaisha, Tokyo 146-8501 (JP)
(72) Inventor: FUKUSHIMA, Takayuki, Tokyo, 146-8501 (JP)
(74) Representative: Canon Europe Limited

(57) **Abstract**

A document feeder includes a conveyance unit for conveying a document an image of which is read at a reading position, a conveyance guide member that is movable in a thickness direction of the document and guides the document at the reading position, and a plurality of rotary members arranged side-by-side in a width direction perpendicular to the conveyance direction. The plurality of rotary members includes a first and a second rotary members arranged side-by-side, and a third and a fourth rotary members arranged side-by-side at positions more distant in the width direction from a middle of a conveyance path than the first and the second rotary members are to the middle of the conveyance path. In the width direction, a distance between the first and the second rotary members is less than a distance between the third and the fourth rotary members.

## Description

### TECHNICAL FIELD

The present disclosure relates to a document feeder that conveys a document, an image reader including the document feeder, and an image forming apparatus including the document feeder.

### BACKGROUND

It is known to provide an image reader mounted on an image forming apparatus such as a copy machine. Further, it is known to arrange an image reader with an auto document feeder (ADF) that conveys a document loaded on a document tray individually (i.e., one sheet at a time).

In the ADF, if speed fluctuations occur during reading of a document, the quality of a read image deteriorates. Thus, there is a need to stabilize conveyance of the document especially at a reading position. To address this issue, Japanese Patent Application Laid-Open No. 2011-205463 proposes a configuration that reduces a conveyance load caused by friction between a document and a conveyance guide by arranging a plurality of rotary members arranged side-by-side in a width direction on the conveyance guide.

However, such an arrangement of rotating members is unable to effectively make contact with a small-size document that has a narrow width, depending on the position of the rotary members arranged on the conveyance guide. Accordingly, such an arrangement may result in an insufficient reduction of the conveyance load.

### SUMMARY

The present disclosure is directed to providing a document feeder, an image reader, and an image forming apparatus that are capable of stabilizing conveyance of a small-size document.

The present disclosure in its first aspect provides a document feeder for conveying a document to a reading position of a reading means for reading an image of the document, the document feeder comprising: a conveyance means for conveying the document; a conveyance guide member that is movable in a thickness direction of the document and arranged to guide the document at the reading position; and a plurality of rotary members that are provided in the conveyance guide member, arranged on an upstream side of the reading position in a conveyance direction of the document, and arranged side-by-side in a width direction perpendicular to the conveyance direction, wherein the plurality of rotary members includes: a first rotary member and a second rotary member arranged side-by-side, and a third rotary member and a fourth rotary member that are arranged side-by-side at positions more distant in the width direction from a middle of a conveyance path than the first rotary member and the second rotary member are to the middle of the conveyance path, and wherein, in the width direction, a distance between the first rotary member and the second rotary member is less than a distance between the third rotary member and the fourth rotary member.

The present disclosure in its second aspect provides a document feeder for conveying a document to a reading position of a reading means for reading an image of the document, the document feeder comprising: a conveyance means for conveying the document; a conveyance guide member that is configured to be movable in a thickness direction of the document and guide the document at the reading position; and a plurality of rotary members that is provided in the conveyance guide member, arranged on an upstream side of the reading position in a conveyance direction of the document, and arranged side-by-side in a width direction perpendicular to the conveyance direction, wherein a distance between two adjacent rotary members among the plurality of rotary members becomes less as the two adjacent rotary members are close to a middle of a conveyance path. Put another way, the distance between two adjacent rotary members, among the plurality of rotary members, decreases as the position of the two adjacent rotary members approaches the middle of a conveyance path. Alternatively, the arrangement of the rotary members may be defined such that adjacent rotary members located nearer to the middle of the conveyance path are spaced by a smaller distance than adjacent rotary members located farther from the middle of the conveyance path. For example, a first distance between a first pair of adjacent rotary members arranged at a first position relative to a middle of the conveyance path may be smaller than a second distance between a second pair of adjacent rotary members arranged at a second position that is farther from the middle of the conveyance path than the first position.

The present disclosure in its third aspect provides an image reader comprising the document feeder according to any one of the first and second aspects; and an apparatus main body including the reading means and pivotably supporting the document feeder.

The present disclosure in its fourth aspect provides an image forming apparatus comprising the image reader according to the third aspect; and an image forming means for forming an image on a sheet based on the image of the document read by the reading means.

According to the present disclosure, the term "side-by-side" refers broadly to an arrangement in which two or more entities are positioned substantially adjacent to one another. The entities may be located alongside each other in whole or in part, and need not be directly touching but can be spaced apart (e.g., to allow relative movement of at least one of the entities). The arrangement may include, for example, the entities being generally parallel, laterally aligned, or positioned with overlapping extents in a common direction. No specific orientation, spacing, or degree of alignment is required unless otherwise stated.

Optional features of the disclosure will now be set out. These are applicable singly or in any combination with any aspect of the disclosure.

The first rotary member may be a rotary member located closest to the middle of the conveyance path among the plurality of rotary members.

The plurality of rotary members may include a fifth rotary member disposed at a position symmetrical to the first rotary member with respect to the middle of the conveyance path.

A distance between the first rotary member and the fifth rotary member may be less than a width of a conveyable, minimum-size document (e.g., a minimum-sized document that can be conveyed through the document feeder).

A distance between the first rotary member and the fifth rotary member may be 48 mm or less.

The second rotary member may be a rotary member located second closest to the middle of the conveyance path among the plurality of rotary members.

The plurality of rotary members may include a sixth rotary member disposed at a position symmetrical to the second rotary member with respect to the middle of the conveyance path.

A distance between the second rotary member and the sixth rotary member may be 105 mm or less.

At least one, or each, of the plurality of rotary members may be arranged symmetrically with respect to the middle of the conveyance path.

The conveyance guide member may include a plurality of other rotary members arranged on a downstream side of the reading position in the conveyance direction (e.g., the plurality of other rotary members may be positioned downstream from the reading position in the conveyance direction).

The conveyance guide member may be formed of a resin material.

A metal reinforcing member may be attached to the conveyance guide member on an opposite side of the conveyance path.

The conveyance guide member may include, at the reading position, an inclined portion that inclines downward towards the downstream side in the conveyance direction.

The inclined portion may be inclined relative to a horizontal direction at an angle of between 10 to 20 degrees. The inclined portion may be inclined relative to the horizontal direction at an angle of 17 degrees. The horizontal direction may be defined by a transparent plate arranged at the reading position of the reading means.

Features of the present disclosure will become apparent from the following description of embodiments with reference to the attached drawings. The following description of embodiments is described by way of example.

### BRIEF DESCRIPTION OF THE DRAWINGS

Fig. 1 is a cross-sectional view schematically illustrating an image forming apparatus.
Fig. 2 is a perspective view illustrating an image reader.
Fig. 3 is a cross-sectional view schematically illustrating the image reader.
Fig. 4 is a view illustrating the image reader in a state where an auto document feeder (ADF) is open.
Fig. 5 is an enlarged cross-sectional view illustrating the vicinity of a reading position of the image reader.
Fig. 6 is a perspective view illustrating a platen guide unit.
Fig. 7 is a plan view when the platen guide unit is viewed from below.
Fig. 8 is a view when the vicinity of the reading position of the image reader is viewed from above.

### DESCRIPTION OF THE EMBODIMENTS

An embodiment of the present disclosure will be described below with reference to the accompanying drawings. However, the following embodiment is merely an example of embodying the present disclosure, and does not limit the technical scope of the present disclosure.

### (Image Forming Apparatus)

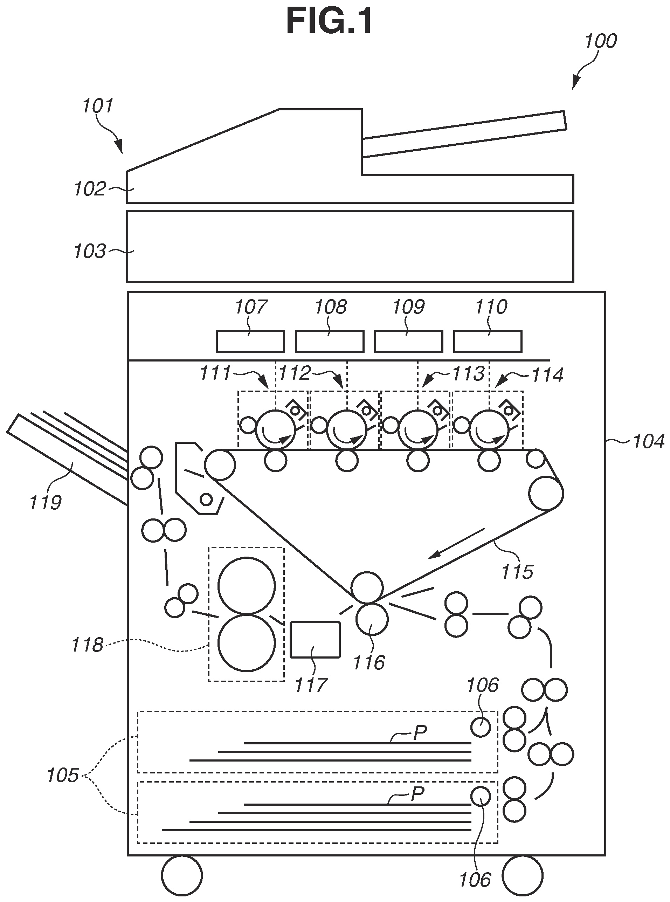

First, an image forming apparatus 100 according to the present embodiment will be described with reference to Fig. 1. Fig. 1 is a cross-sectional view schematically illustrating the image forming apparatus 100 when viewed from the front side.

As illustrated in Fig. 1, the image forming apparatus 100 includes an image forming apparatus main body 104 that forms an image on a sheet P and an image reader 101 provided above the image forming apparatus main body 104. The image forming apparatus 100 forms a toner image on the sheet P based on image data read by the image reader 101 or an image signal from a host apparatus such as a personal computer communicably connected to the image forming apparatus 100. Examples of the sheet P serving as a recording medium include a sheet material such as plain paper, a plastic film, and a cloth.

The image forming apparatus main body 104 includes therein four laser scanners 107 to 110, four image forming units 111 to 114, and a fixing unit 118. The four laser scanners 107 to 110 and the four image forming units 111 to 114 are image forming sections using electrophotography and corresponding to yellow (Y), magenta (M), cyan (C), and black (K). The laser scanners 107 to 110 emit laser beams to respective photosensitive bodies included in the image forming units 111 to 114 based on input image signals. These image forming units 111 to 114 are horizontally arranged along an intermediate transfer belt 115 (in the left-right direction in Fig. 1).

In the image forming unit 111, a yellow toner image is formed, and the formed yellow toner image is primarily transferred to the intermediate transfer belt 115. In the image forming unit 112, a magenta toner image is formed, and the formed magenta toner image is primarily transferred to the intermediate transfer belt 115 so as to be superimposed on the transferred yellow toner image. In the image forming unit 113, a cyan toner image is formed, and the formed cyan toner image is primarily transferred to the intermediate transfer belt 115 so as to be superimposed on the transferred yellow and magenta toner images. In the image forming unit 114, a black toner image is formed, and the formed black toner image is primarily transferred to the intermediate transfer belt 115 so as to be superimposed on the transferred yellow, magenta, and cyan toner images.

In a lower portion of the image forming apparatus main body 104, a sheet feeding cassette 105 is disposed so that the sheet feeding cassette 105 can be pulled out to the front side. The image forming apparatus 100 feeds the sheet P accommodated in the sheet feeding cassette 105 with a pickup roller 106 to a secondary transfer nip portion that is in contact with the intermediate transfer belt 115 and a secondary transfer unit 116. During conveyance of the sheet P, the image forming apparatus 100 conveys the sheet P in synchronization with a toner image on the intermediate transfer belt 115. The multi-layered toner image on the intermediate transfer belt 115 is then transferred onto the sheet P at the secondary transfer nip portion by the action of a secondary transfer bias voltage to be applied to the secondary transfer unit 116.

The sheet P to which the toner image has been secondarily transferred by the secondary transfer unit 116 is conveyed by a conveyance belt 117 to the fixing unit 118. Then, the toner image is fixed onto the sheet P by heat and pressure applied by the fixing unit 118. After the toner image is fixed on the surface of the sheet P, the sheet P is discharged to a sheet discharge tray 119.

In the present embodiment, the image forming apparatus 100 includes an electrophotographic image forming unit, but the image forming unit is not limited thereto and may be another image forming unit using an ink-jet method or the like.

### (Image Reader)

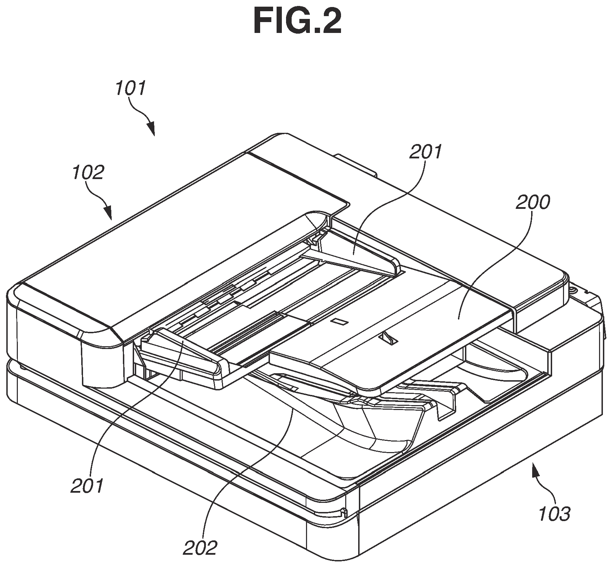

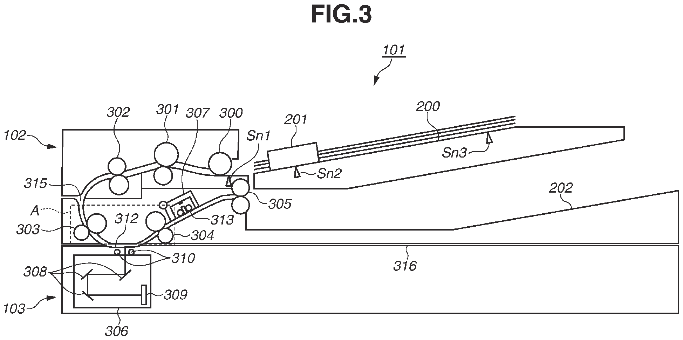

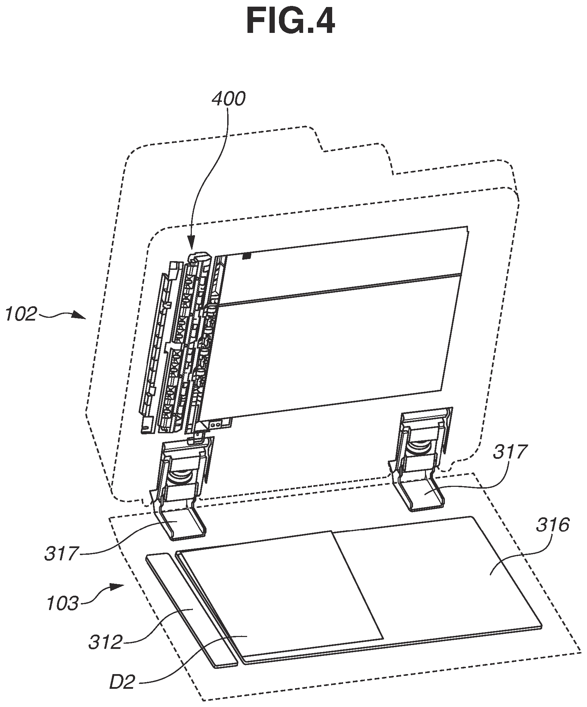

Subsequently, the image reader 101 will be described with reference to Figs. 2 to 4. Fig. 2 is a perspective view illustrating the image reader 101. Fig. 3 is a schematic view illustrating a cross section of the image reader 101. Fig. 4 is a schematic view illustrating the image reader 101 in a state where an auto document feeder (ADF) 102 is open.

The image reader 101 includes a reader 103 and the ADF 102. The reader 103 is mounted on top of the image forming apparatus main body 104. As illustrated in Fig. 4, the ADF 102 is supported on the reader 103 via hinges 317, and is configured to be pivotable with respect to the reader 103. The ADF 102 is an example of a document feeder that conveys a document. The reader 103 is an example of an apparatus main body of the image reader 101.

As illustrated in Fig. 3, the reader 103 includes a first reading unit 306, a document feeding-reading glass 312, and a platen glass 316. Additionally, the ADF 102 includes a document tray 200, a discharge tray 202, a second reading unit 307, and a document feeding-reading glass 313. Furthermore, the ADF 102 includes a pickup roller 300, a separation roller pair 301, a pull-out roller pair 302, a first read roller pair 303, a second read roller pair 304, and a discharge roller pair 305. These conveyance rollers 300 to 305 are examples of a conveyance unit that conveys a document D1.

The first reading unit 306 and the second reading unit 307 are examples of a reading unit that reads image information from a conveyed document. In the present embodiment, the first reading unit 306 is an image sensor unit using a charge-coupled device (CCD) method, and the second reading unit 307 is an image sensor unit using a contact image sensor (CIS) method. The first reading unit 306 includes a sensor substrate 309 on which light-receiving elements are arranged side-by-side in a sheet width direction, a light source 310 that emits light to a document D1, and a plurality of mirrors 308 that constitutes a reduction optical system that forms an optical image of the document D1 on a light-receiving surface of the sensor substrate 309. The second reading unit 307 includes a complementary metal-oxide semiconductor (CMOS) sensor substrate on which light-receiving elements are arranged side-by-side in the sheet width direction, a light source that emits light to the document D1, and an equal-magnification optical system that forms an optical image of the document D1 on the light-receiving surface of the CMOS sensor substrate.

Each of the first reading unit 306 and the second reading unit 307 serving as a reading unit according to the present embodiment is a line sensor that acquires a line image of the document D1 in a predetermined reading period. The line image is an image of one row in which pixels are arranged side by side in the sheet width direction, which is a main-scanning direction.

A control unit in the image reader 101 connects line images acquired by the first reading unit 306 and the second reading unit 307 in a sub-scanning direction (document conveyance direction), and thereby acquires image information as two-dimensional image data.

The pickup roller 300 is a pickup member that feeds out the document D1 from a document tray 200 serving as a loading unit on which the document D1 is loaded. The separation roller pair 301 includes a feed roller and a separation roller. The feed roller is a feed member that feeds the document D1 fed out from the document tray 200. The separation roller comes in contact with the feed roller and forms a separation nip.

The separation roller is an example of the separation member that applies friction force to a sheet to separate the sheet. The separation roller may be a roller member that is supported, via a torque limiter, on a shaft member fixed to a frame body of the ADF 102. Additionally, the separation roller may be a retard-drive type roller that receives driving force via the torque limiter in a direction (clockwise direction in Fig. 3) opposite to the moving direction of the document D1 (document feeding direction) at the separation nip. Alternatively, a pad-shaped elastic member that comes in contact with the feed roller may be used as the separation member in substitution for the separation roller.

The image reader 101 is capable of executing an image reading operation (document flow reading), in which the first reading unit 306 and the second reading unit 307 read image information from the document D1 while the ADF 102 conveys the document D1 one sheet by one sheet. When the image reading operation starts, the pickup roller 300 rotates in a state of being in contact with the uppermost document D1 on the document tray 200, and sends out the document D1 from the document tray 200. In the separation roller pair 301, the feed roller conveys the document D1 while the separation roller applies friction force to the document D1 in the opposite direction of the sheet feeding direction at the separation nip. In a case where a document D1 consisting of a plurality of sheets enters the separation nip, the separation roller regulates passage of sheets of the document D1 other than one sheet of the document D1 in contact with the feed roller through the separation nip. As a result, the document D1 passes through the separation nip in a state of being separated one sheet by one sheet.

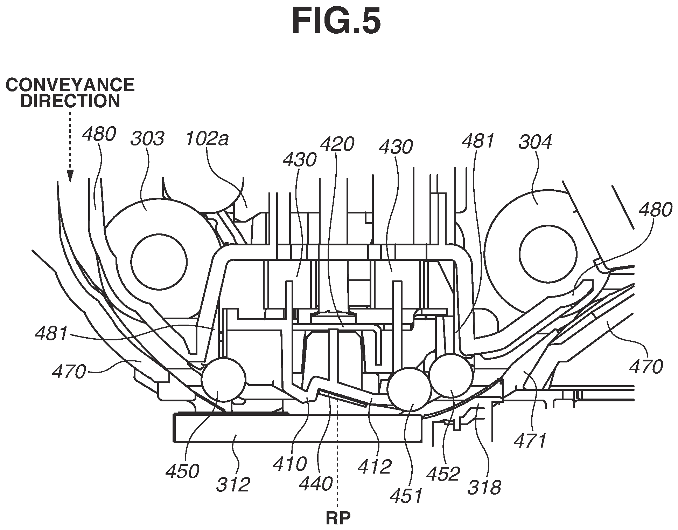

The document D1 having passed through the separation nip is sequentially conveyed by the pull-out roller pair 302, the first read roller pair 303, and the second read roller pair 304 in this order. In this process, the first reading unit 306 optically scans a first surface (front surface) of the document D1 through the document feeding-reading glass 312 at a reading position RP (refer to Fig. 5) and converts data into electronic signals. The second reading unit 307 optically scans a second surface (back surface) of the document D1 through the document feeding-reading glass 313 and converts data into electronic signals. As a result, image information as electronic image data is acquired. The document D1 from which the image information is read out is discharged by the discharge roller pair 305 from a conveyance path in the ADF 102, and is stacked on the discharge tray 202.

The image reader 101 is also capable of reading image information from a still document placed on the reader 103. In this case, as illustrated in Fig. 4, a user opens the ADF 102, sets a document D2 on the platen glass 316 in the reader 103, thereafter closes the ADF 102, and gives an instruction for execution of reading. Then, the first reading unit 306 optically scans the document D2 while moving in the sub-scanning direction, and acquires image information.

### (Document Detection Mechanism of ADF)

Furthermore, the ADF 102 includes a detection unit (size detection unit) that detects a document size. The size detection unit according to the present embodiment is composed of a document sensor Sn1, a document width sensor Sn2, and a document length sensor Sn3. The document sensor Sn1, the document width sensor Sn2, and the document length sensor Sn3 are examples of a size acquisition unit that acquires information regarding a size of the document D1. The size acquisition unit may be an operation panel on which the user can enter a document size.

Each of the document sensor Sn1 and the document length sensor Sn3 is a sensor that detects the presence or absence of the document D1 at a predetermined position on the document tray 200. The document sensor Sn1 is disposed in the vicinity of an end position of the document tray 200 on a downstream side in the document feed direction. The document length sensor Sn3 is disposed at a position distant from the document sensor Sn1 on an upstream side in the document feed direction by a predetermined length. For each of the document sensor Sn1 and the document length sensor Sn3, a reflective-type or a transmissive-type optical sensor can be used.

The document width sensor Sn2 is a sensor that detects a width of a document in a width direction perpendicular to the document feed direction (document conveyance direction). As the document width sensor Sn2, an optical sensor can be used such as a photo-interrupter that detects a position of a light shielding plate provided on each of side regulating plates 201 included in the document tray 200. The side regulating plates 201 are a pair of regulating members that move in conjunction with each other in the document width direction and that regulates two ends of the document (Fig. 2).

The control unit in the image reader 101 determines the presence or absence of the document D1 on the document tray 200 based on a result of detection by the document sensor Sn1. Additionally, the control unit in the image reader 101 determines a length of the document D1 in the document width direction (hereinafter simply referred to as a document width) on the document tray 200 based on a result of detection by the document width sensor Sn2. Additionally, the control unit in the image reader 101 determines whether a length of the document D1 in the document feed direction (hereinafter simply referred to as a document length) on the document tray 200 is a predetermined length or more based on a result of detection by the document length sensor Sn3.

### (Configuration of Platen Guide Unit)

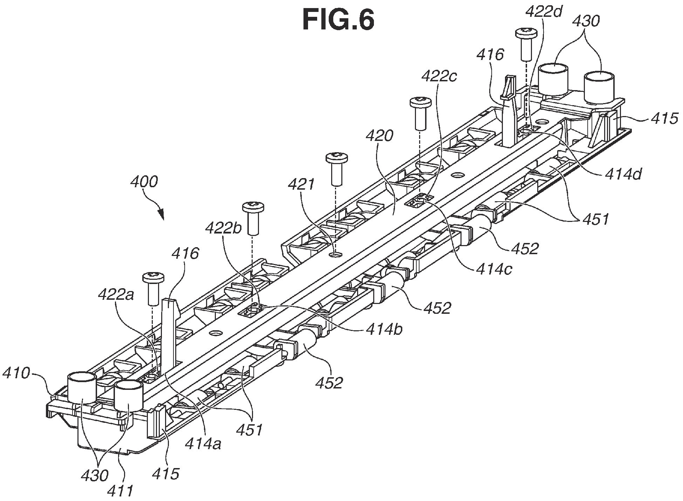

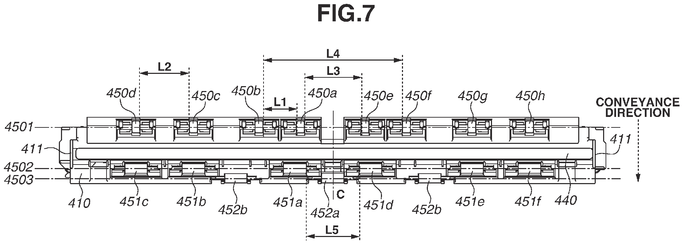

Subsequently, a configuration of a platen guide unit 400 will be described with reference to Figs. 5 to 7. Fig. 5 is an enlarged view of a region A in the vicinity of the reading position RP (refer to Fig. 4). Fig. 6 is a view illustrating components that constitute the platen guide unit 400. Fig. 7 is a plan view when the platen guide unit 400 is viewed from the conveyance path side (the document feeding-reading glass 312 side).

The platen guide unit 400 is disposed to face the document feeding-reading glass 312 at the reading position RP of the first reading unit 306, and guides the document at the reading position RP.

The platen guide unit 400 is configured with a platen guide 410, a reinforcing member 420, urging members 430, a white member 440, and a plurality of rotary members (rotary members 450, 451, and 452). The platen guide unit 400 is attached to a housing 102a of the ADF 102 so as to be movable in the document thickness direction (e.g., a height direction of the apparatus, and a vertical direction in Fig. 5), and is urged toward the document feeding-reading glass 312 by the urging members 430 as springs.

The platen guide 410 is a main body component of the platen guide unit 400, and forms a guide surface that guides the document. The platen guide 410 is an example of a conveyance guide member. Additionally, the reinforcing member 420 is a component formed from a metallic material, reinforces the platen guide 410 made of resin, and prevents deformation of the platen guide 410. The white member 440 is a white plate-like component, and serves as a background when the first reading unit 306 reads an image of the document at the reading position RP.

The plurality of rotary members provided in the platen guide unit 400 includes a plurality of rotary members 450 arranged on the upstream side of the reading position RP, and a plurality of rotary members 451 and 452 arranged on the downstream side of the reading position RP. As illustrated in Fig. 7, the plurality of rotary members 450 arranged on the upstream side of the reading position RP is composed of eight rotary members 450a to 450h. In a case where there is no particular need to distinguish the rotary members 450a to 450h, these are referred to as rotary members 450. Similarly, the plurality of rotary members 451 arranged on the downstream side of the reading position RP is composed of six rotary members 451a to 451f. In a case where there is no particular need to distinguish the rotary members 451a to 451f, these are referred to as rotary members 451. Furthermore, the plurality of rotary members 452 arranged on the downstream side of the reading position RP is similarly composed of three rotary members 452a to 452c. In a case where there is no particular need to distinguish the rotary members 452a to 452c, these are referred to as rotary members 452.

The plurality of rotary members 450, the plurality of rotary members 451, and the plurality of rotary members 452 are driven rollers that rotate by coming into contact with the document conveyed by the first read roller pair 303 and the second read roller pair 304. That is, the rotary members 450, 451, and 452 are merely rotatably attached to the platen guide 410, and do not receive driving force from a driving source such as a motor.

The conveyance of the document in the region A in the vicinity of the reading position RP will now be described in detail. The document having been fed by the pull-out roller pair 302 is nipped by the first read roller pair 303, and conveyed through the conveyance path formed by an outer guide member 470 and an inner guide member 480 that are provided in the housing 102a of the ADF 102. The document conveyed by the first read roller pair 303 then comes in contact with the plurality of rotary members 450 arranged in the platen guide unit 400 and is conveyed between the document feeding-reading glass 312 and the white member 440. At this time, an image on the document is read by the first reading unit 306 at the reading position RP.

At positions adjacent to the document feeding-reading glass 312 in the reader 103 (on the right side of the document feeding-reading glass 312 in Fig. 5), scooping guides 318 are provided. Each scooping guide 318 has a curved surface that rises upward as it goes downstream side in the conveyance direction. The plurality of scooping guides 318 is arranged at intervals in the width direction. Additionally, swing guide members 471 are provided at positions adjacent to the document feeding-reading glass 312 on the outer guide member 470. The swing guide members 471 are provided so as to be swingable about the downstream side of the outer guide member 470 in the conveyance direction. The plurality of swing guide members 471 is arranged at intervals in the width direction.

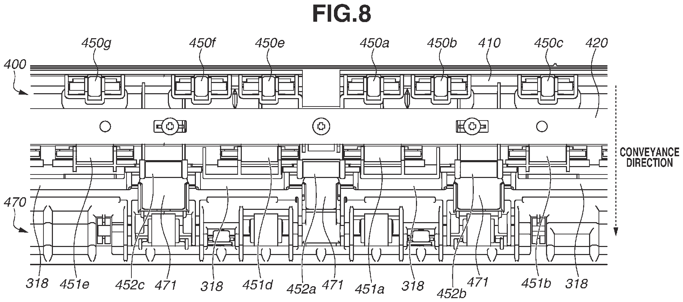

As illustrated in Fig. 8, each swing guide member 471 is disposed at a position that is inserted between the scooping guides 318 arranged at an interval in the width direction when the ADF 102 is closed. That is, each swing guide member 471 is disposed such that at least part of the swing guide member 471 overlaps with the scooping guide 318 when viewed from the width direction. That is, the plurality of scooping guides 318 and the plurality of swing guide members 471 are alternately arranged in the width direction.

The upstream end of each scooping guide 318 in the conveyance direction is located lower than the upper surface of the document feeding-reading glass 312. Additionally, the upstream end of each swing guide member 471 in the conveyance direction is also located lower than the upper surface of the document feeding-reading glass 312 in a state where the ADF 102 is closed.

Hence, the reading end of the document having passed through the reading position RP is scooped by the scooping guides 318 and the swing guide members 471, and the document is guided to the inside of the ADF 102. At this time, the document passes through the conveyance path and is guided to the second read roller pair 304 while coming in contact with the rotary members 451 and 452 in the platen guide unit 400.

In this manner, the present embodiment is directed to the configuration in which the document comes in contact with the plurality of rotary members 450, 451, and 452 in the vicinity of the reading position RP. The plurality of rotary members 450, 451, and 452 regulates the lifting of the document at the reading position RP. Hence, the position of the platen guide unit 400 in the height and conveyance directions greatly influences the quality of a read image.

To address this, in the present embodiment, the platen guide unit 400 is attached to the housing 102a for the ADF 102 so as to be movable in the height direction. Furthermore, as illustrated in Fig. 6, an abutting portion 411 that protrudes downward is formed outside a document passing region of the platen guide 410 in the width direction, and the urging members 430 are attached above the abutting portion 411. With this configuration, the platen guide 410 is urged toward the document feeding-reading glass 312 by the urging members 430, and the abutting portion 411 comes into a state of abutting against the document feeding-reading glass 312. This makes it possible to determine the position of the platen guide unit 400 in the height direction, and maintain a gap between the document feeding-reading glass 312 and the white member 440 of an appropriate size. Additionally, the position of the platen guide unit 400 in the conveyance direction is regulated by contact of a protruding portion 481 provided on the inner guide member 480 and a surface portion 415 provided on the platen guide 410.

As illustrated in Fig. 4, when the ADF 102 is opened with respect to the reader 103, the platen guide unit 400 may be exposed to the outside and come off from the housing 102a. To prevent this, two claw portions 416 extending upward are formed on the platen guide 410 (refer to Fig. 6) and are engaged with the respective inner guide members 480, which prevents the platen guide unit 400 from coming off from the housing 102a.

Since the control unit of the image reader 101 performs image processing such as skew correction based on a shadow of the document in a read image, it is favorable for the shadow cast by the reading end of the document against the background to be dark when the first reading unit 306 reads the document image. To address this, an inclined portion 412 that inclines downward toward the downstream side in the conveyance direction is formed in the platen guide 410. Put another way, the platen guide 410 includes an inclined portion 412 that slopes downward toward the downstream side in the conveyance direction. The inclined portion 412 is, for example, angled relative to a horizontal plane of the apparatus so that it descends from the reading position toward the downstream side. The white member 440, which serves as the background for the read image, may be optionally attached to the inclined portion 412. With this configuration, the shadow cast by the reading end of the document against the white member 440 becomes darker by light from the light source 310 located on the upstream side of the reading position RP. In the present embodiment, the inclined portion 412 is inclined at 17 [deg] relative to the document feeding-reading glass 312 (e.g., a horizontal direction), and the angle of the inclined portion 412 relative to the horizontal direction is favorably from 10 to 20 [deg].

As described above, the platen guide 410 has a complex shape including the abutting portion 411 and the inclined portion 412. To implement these shapes, the platen guide 410 is formed of a resin material. However, in a case where the platen guide 410 is formed of the resin material, component tolerances may increase due to warping that occurs during molding, and the platen guide 410 may deform due to a reaction force received from the document. To address this, the platen guide unit 400 according to the present embodiment is provided with the reinforcing member 420 made of metal. The reinforcing member 420 has a shape that is long in the width direction. A hole 421 and elongated holes 422a to 422d are formed in the reinforcing member 420. On the opposite side of the conveyance path (the back side), four protruding portions 414a to 414d protruding upward are formed on the platen guide 410, and are inserted into the elongated holes 422a to 422d, respectively. Additionally, the two claw portions 416 mentioned above are inserted into the elongated holes 422a and 422d. In this state, screws are threadably engaged with the hole 421 and the four protruding portions 414a to 414d, whereby the reinforcing member 420 is fixed to the platen guide 410.

### (Arrangement of Rotary Members in Platen Guide Unit)

Next, the arrangement of the plurality of rotary members in the platen guide unit 400 will be described. As described above, the plurality of rotary members 450 arranged on the upstream side of the reading position RP, and the plurality of rotary members 451 and 452 arranged on the downstream side of the reading position RP are rotatably attached to the platen guide unit 400.

First, the arrangement of the plurality of rotary members 450 on the upstream side of the reading position RP is described. In the platen guide unit 400, eight rotary members 450a to 450h serving as the plurality of rotary members 450 are arranged side-by-side in the width direction as illustrated in Fig. 7. The rotary members 450a to 450h rotate about a common first rotational axis 4501. Additionally, the four rotary members 450a to 450d are arranged on one side (the left side in Fig. 7) of a conveyance center C, which is in a middle of the conveyance path in the width direction, and the four rotary members 450e to 450h are arranged on the other side (the right side in Fig. 7) of the conveyance center C. The rotary members 450a to 450d and the rotary members 450e to 450h are arranged symmetrically with respect to the conveyance center C.

A distance L1 between the adjacent rotary members 450a and 450b located close to the conveyance center C is less than a distance L2 between the adjacent rotary members 450c and 450d located far from the conveyance center C (L1 < L2). In other words, on the one side of the conveyance center C, a distance between two adjacent rotary members becomes less as the two adjacent rotary members are closer to the conveyance center C (e.g., as the adjacent rotary members are arranged/installed closer to the conveyance center C). In the present embodiment, L1 is 25.6 [mm], and L2 is 35.6 [mm]. The distance between the two adjacent rotary members is referred to as a distance from an end of one of the rotary members (e.g., a side arranged in a vertical plane of the apparatus) to an end of the other of the rotary members (e.g., a corresponding end of the other rotary member). In Fig. 7, for example, the distance L1 is shown as being measured between opposing ends of the two adjacent rotary members 450a, 450b. However, any respective ends of the rotary members may be used to define the distance, provided that the same type of end is used to consistently when determining the comparative distance between another pair of adjacent rotary members (e.g., L2).

The rotary member 450a is a rotary member located closest to the conveyance center C among the plurality of rotary members 450 on one side, and is an example of a first rotary member. The rotary member 450b is the rotating member located second closest to the conveyance center C among the plurality of rotary members 450 on the one side, and is an example of a second rotary member. The rotary member 450d is a rotary member located farthest from the conveyance center C among the plurality of rotary members 450 on the one side, and is an example of a third rotary member. The rotary member 450c is the rotary member located second farthest from the conveyance center C among the plurality of rotary members 450 on the one side, and is an example of a fourth rotary member.

In the present embodiment, a distance L3 between the rotary member 450a and 450e that are located closest to the conveyance center C is 40 [mm]. A distance L4 between the rotary members 450b and 450f that are located second closest to the conveyance center C is 91.2 [mm]. The rotary member 450e is disposed at a position symmetrical to the rotary member 450a with respect to the conveyance center C and is the rotating member located closest to the conveyance center C among the plurality of rotary members 450 on the other side. The rotary member 450e is an example of a fifth rotary member. The rotary member 450f is disposed at a position symmetrical to the rotary member 450b with respect to the conveyance center C and is the rotating member located second closest to the conveyance center C among the plurality of rotary members 450 on the other side. The rotary member 450f is an example of a sixth rotary member.

In the present embodiment, a document having a length of an A6 size in the width direction (105 [mm]) or less is referred to as a "small-size document", and a document having a length greater than that of the A6 size in the width direction is referred to as a "large-size document". In a case where an A6-size document, which is a small-size document, is conveyed, the plurality of rotary members 450 is arranged such that the four rotary members (450a, 450b, 450e, and 450f) are capable of coming into contact with the document on the upstream side of the reading position RP. Furthermore, a conveyable, minimum-size document according to product specifications of the ADF 102 in the present embodiment is a business card-size document having a width of 48 [mm]. That is, even in a case where the conveyable, minimum-size document is conveyed, the two rotary members 450a and 450e are capable of coming in contact with the document on the upstream side of the reading position RP.

In order for two rotary members to come in contact with the business card-size document when conveyed, the distance L3 between the rotary members 450a and 450e that are located closest to the conveyance center C only needs to be 48 [mm] or less. Additionally, in order for four rotary members to come in contact with the A6-size document when conveyed, the distance L4 between the rotary members 450b and 450f that are located second closest to the conveyance center C only needs to be 105 [mm] or less.

Next, the arrangement of the plurality of rotary members 451 and 452 disposed on the downstream side of the reading position RP will be described. As illustrated in Fig. 7, six rotary members 451a to 451f, which are the plurality of rotary members 451, are arranged side-by-side in the width direction in the platen guide unit 400. These rotary members 451a to 451f rotate about a common second rotational axis 4502. Three rotary members 452a to 452c, which are the plurality of rotary members 452, are arranged side-by-side in the width direction in the platen guide unit 400. These rotary members 452a to 452c rotate about a common third rotational axis 4503.

The three rotary members 452a to 452c are arranged on the downstream side of the six rotary members 451a to 451f in the conveyance direction, and are arranged such that the rotary members 451 and 452 partially overlap with each other when viewed from the rotational axis direction.

In the present embodiment, a distance L5 between the rotary members 451a and 451d that are located closest to the conveyance center C among the plurality of rotary members 451 is 46.8 [mm]. Additionally, the rotary member 452a is disposed at the conveyance center C. That is, even in the case where the conveyable, minimum-size document is conveyed, the three rotary members 451a, 451d, and 452a are capable of coming in contact with the document on the downstream side of the reading position RP.

In a case where an A3-size document having a width of 297 [mm] is conveyed, all of the rotary members 450a to 450h, the rotary members 451a to 451f, and the rotary members 452a to 452c come in contact with the document.

### (Positional Relationship Between Swing Guide and Rotary Members)

Next, a positional relationship between the plurality of swing guide members 471 and the plurality of rotary members 452, which are arranged on the outer guide member 470 of the ADF 102, will be described. As described above, the plurality of scooping guides 318 and the plurality of swing guide members 471 are alternately arranged in the width direction at positions adjacent to the document feeding-reading glass 312. The plurality of rotary members 452a to 452c is arranged at positions overlapping with the respective swing guide members 471 in the conveyance direction. When the ADF 102 is viewed from below, the plurality of rotary members 452a to 452c at least partially overlaps with the respective swing guide members 471. In other words, the plurality of rotary members 452a to 452c is arranged at positions facing the respective swing guide members 471.

### (Summary of Present Embodiment)

As described above, the distance L1 between the adjacent rotary members 450a and 450b that are located close to the conveyance center C is less than the distance L2 between the adjacent rotary members 450c and 450d that are located far from the conveyance center C (L1 < L2). With this configuration, even in the case where a small-size document is conveyed, a larger number of rotary members come in contact with the document, which makes it possible to stabilize the conveyance of the small-size document.

Additionally, in the present embodiment, the distance L3 between the rotary members 450a and 450e that are located closest to the conveyance center C is less than the width of the conveyable, minimum-size document. With this configuration, even in the case where the minimum-size document is conveyed, the plurality of rotary members comes in contact with the document, which makes it possible to stabilize the conveyance of the minimum-size document.

Additionally, the rotary members 450a to 450d and the rotary members 450e to 450h are arranged symmetrically with respect to the conveyance center C. As a result, the conveyance load applied to the document in the width direction can be made substantially uniform, which makes it possible to suppress skewing of the document.

Arranging the plurality of swing guide members 471 and the plurality of scooping guides 318 alternately makes it possible to smoothly guide the reading end of the document from the document feeding-reading glass 312 to the inside of the ADF 102. Additionally, by providing the swing guide members 471 so as to be capable of swinging, the swing guide members 471 take orientations appropriate for conveyance, whilst maintaining contact with the upper surface of the reader 103, when the ADF 102 is closed. Meanwhile, since the swing guide members 471 are capable of swinging, a size of a gap in the conveyance path defined by the swing guide members 471 becomes unstable. For example, in a case where the gap in the conveyance path formed by the swing guide members 471 is large, there is a possibility that lifting of the document occurs, which adversely affects the read image.

In the present embodiment, however, the plurality of rotary members 452a to 452c are arranged at positions facing the respective swing guide members 471. This makes it possible to narrow the gap in the conveyance path in the swing guide members 471, thereby stabilizing conveyance of the document.

According to the present embodiment, it is possible to provide a document feeder, an image reader, and an image forming apparatus that are capable of stabilizing conveyance of a small-size document.

Various embodiments have been described in detail above but it will be understood that the present disclosure is not limited to these embodiments and encompasses all modifications, variants, alternatives and equivalents falling within the scope of the appended claims.

## Claims

1. A document feeder (102) for conveying a document to a reading position (RP) of a reading means (103) for reading an image of the document, the document feeder comprising:
a conveyance means for conveying the document;
a conveyance guide member (400) that is movable in a thickness direction of the document and arranged to guide the document at the reading position; and
a plurality of rotary members (450) that are provided in the conveyance guide member, arranged on an upstream side of the reading position in a conveyance direction of the document, and arranged side-by-side in a width direction perpendicular to the conveyance direction,
wherein the plurality of rotary members includes:
a first rotary member (450a) and a second rotary member (450b) arranged side-by-side, and
a third rotary member (450d) and a fourth rotary member (450c) that are arranged side-by-side at positions more distant in the width direction from a middle of a conveyance path than the first rotary member and the second rotary member are to the middle of the conveyance path, and
wherein, in the width direction, a distance between the first rotary member and the second rotary member is less than a distance between the third rotary member and the fourth rotary member.

2. The document feeder according to claim 1,
wherein the first rotary member is a rotary member located closest to the middle of the conveyance path among the plurality of rotary members,
wherein the plurality of rotary members includes a fifth rotary member (450e) disposed at a position symmetrical to the first rotary member with respect to the middle of the conveyance path, and
wherein a distance between the first rotary member and the fifth rotary member is less than a width of a conveyable, minimum-size document.

3. The document feeder according to claim 1 or claim 2,
wherein the first rotary member is a rotary member located closest to the middle of the conveyance path among the plurality of rotary members,
wherein the plurality of rotary members includes a fifth rotary member (450e) disposed at a position symmetrical to the first rotary member with respect to the middle of the conveyance path, and
wherein a distance between the first rotary member and the fifth rotary member is 48 mm or less.

4. The document feeder according to claim 3,
wherein the second rotary member is a rotary member located second closest to the middle of the conveyance path among the plurality of rotary members,
wherein the plurality of rotary members includes a sixth rotary member (450f) disposed at a position symmetrical to the second rotary member with respect to the middle of the conveyance path, and
wherein a distance between the second rotary member and the sixth rotary member is 105 mm or less.

5. The document feeder according to any one of the preceding claims, wherein the plurality of rotary members is arranged symmetrically with respect to the middle of the conveyance path.

6. The document feeder according to any one of the preceding claims, wherein the conveyance guide member includes a plurality of other rotary members (451, 452) arranged on a downstream side of the reading position in the conveyance direction.

7. The document feeder according to any one of the preceding claims, wherein the conveyance guide member is formed of a resin material, and a metal reinforcing member (420) is attached to the conveyance guide member on an opposite side of the conveyance path.

8. The document feeder according to any one of the preceding claims, wherein the conveyance guide member includes, at the reading position, an inclined portion (412) that inclines downward toward the downstream side in the conveyance direction.

9. The document feeder according to claim 8, wherein the inclined portion is inclined relative to a horizontal direction at an angle of between 10 to 20 degrees.

10. The document feeder according to claim 9, wherein the inclined portion is inclined relative to the horizontal direction at an angle of 17 degrees

11. A document feeder for conveying a document to a reading position of a reading means for reading an image of the document, the document feeder comprising:
a conveyance means for conveying the document;
a conveyance guide member that is configured to be movable in a thickness direction of the document and guide the document at the reading position; and
a plurality of rotary members that are provided in the conveyance guide member, arranged on an upstream side of the reading position in a conveyance direction of the document, and arranged side-by-side in a width direction perpendicular to the conveyance direction,
wherein a distance between two adjacent rotary members among the plurality of rotary members decreases as the position of the two adjacent rotary members approaches a middle of a conveyance path.

12. An image reader (101) comprising:
the document feeder according to any one of claims 1 to 11; and
an apparatus main body including the reading means and pivotably supporting the document feeder.

13. An image forming apparatus (100) comprising:
the image reader according to claim 12; and
an image forming means for forming an image on a sheet based on the image of the document read by the reading means.
